# EUROPÄISCHE PATENTSCHRIFT

(11) **EP 2 568 192 B1**
(45) Veröffentlichungstag und Bekanntmachung des Hinweises auf die Patenterteilung: **29.07.2015**
(21) Anmeldenummer: 12182967.5
(22) Anmeldetag: 04.09.2012
(51) Int. Cl.: F16D 23/12

(54) **Kupplungsanordnung, Kraftfahrzeugantriebsstrang und Kupplungsbetätigungsverfahren**
Coupling assembly, motor vehicle power train and coupling actuation method
Agencement d'embrayage, faisceau d'entraînement de véhicule automobile et procédé d'actionnement d'embrayage

(30) Priorität: 06.09.2011 DE 102011113278
(43) Veröffentlichungstag der Anmeldung: 13.03.2013
(73) Patentinhaber: GETRAG Getriebe- und Zahnradfabrik Hermann Hagenmeyer GmbH & Cie KG, 74199 Untergruppenbach (DE)
(72) Erfinder: Gremplini, Hansi, 74379 Ingersheim (DE); Rühle, Günter, 74369 Löchgau (DE); Bausch, Jochen, 74321 Bietigheim (DE)
(74) Vertreter: Witte, Weller & Partner Patentanwälte mbB

(56) Entgegenhaltungen:
- EP-A1- 1 388 682
- DE-A1- 10 205 411
- FR-A1- 2 567 224
- FR-A1- 2 900 708

## Beschreibung

Die vorliegende Erfindung betrifft eine Kupplungsanordnung zum Verbinden von zwei relativ zueinander drehbaren Bauteilen eines Kraftfahrzeugantriebsstranges, insbesondere zum Verbinden von zwei Wellen eines Kraftfahrzeuggetriebes oder von einer Welle mit einem an der Welle drehbar gelagerten Losrad, mit einer Kupplung, mit einer Aktuatoranordnung zum Betätigen der Kupplung, wobei die Kupplung in einer ersten Aktuatorposition eines Aktuatorabschnittes der Aktuatoranordnung geöffnet ist, und mit einer Arretiereinrichtung zum Arretieren des Aktuatorabschnittes in einer Arretierposition, um die Kupplung geschlossen zu halten.

Ferner betrifft die vorliegende Erfindung einen Kraftfahrzeugantriebsstrang mit einer solchen Kupplungsanordnung sowie ein Verfahren zum Betätigen einer Kupplungsanordnung, die eine Kupplung, eine Aktuatoranordnung und eine Arretiereinrichtung aufweist.

Eine Kupplungsanordnung mit einem Stellmechanismus unter Verwendung eines kurvenförmigen Segmentes an einem Drehhebel ist aus dem Dokument DE 10 2008 013 054 A1 bekannt.

Ferner offenbart das Dokument DE 196 48 581 A1 eine Scheibenbremse mit Feststellbremsfunktion, wobei eine drehbare Betätigungswelle mit Kupplungsmitteln versehen ist, die mit zugeordneten Kupplungsmitteln einer Spindelwelle zusammenwirken und der Feststellung der Scheibenbremse dienen.

Ferner offenbart das Dokument DE 199 17 724 A1 eine Kupplungsanordnung mit zwei Kupplungen, denen jeweils eine eigene Arretiereinrichtung zugeordnet ist. Die Arretiereinrichtungen werden zum Einrichten einer Parksperrenfunktion gleichzeitig betätigt, um das Getriebe im Stillstand zu blockieren. Die Arretiereinrichtung weist ein Kugel-Rampenelement mit einer zugeordneten Schiebemuffe auf.

Ferner offenbart das Dokument DE 10 2007 023 955 A1 eine Vorrichtung zum Betätigen eines Schaltelementes einer Getriebeeinrichtung, bei der eine Reibkupplung mittels einer mechanischen Halteeinrichtung in einer vordefinierten Stellung haltbar ist, von der aus die Kupplung schnell betätigt werden kann.

Kupplungsanordnungen der eingangs genannten Art sind beispielsweise als Trennkupplungsanordnungen in Doppelkupplungsgetrieben verwendbar, wobei die Kupplungsanordnung zwischen einem Antriebsmotor und einem Stufengetriebe mit mehreren Gängen angeordnet ist, und wobei das Stufengetriebe hierbei zwei Teilgetriebe aufweist. Jedem Teilgetriebe sind unterschiedliche Gänge zugeordnet, wobei dem einen Teilgetriebe in der Regel die geraden Gangstufen und dem anderen Teilgetriebe in der Regel die ungeraden Gangstufen zugeordnet sind.

Eine Kupplungsanordnung der oben genannten Art ist auch für einen Antriebsstrang verwendbar, bei dem der Antriebsmotor durch einen Elektromotor gebildet ist und bei dem das Getriebe nur zwei Gangstufen aufweist, wie in dem oben genannten Dokument DE 199 17 724 A1. Hierbei sind zwei Kupplungsanordnungen vorgesehen, die dazu dienen, entweder die eine Gangstufe oder die andere Gangstufe in den Leistungsfluss hin zu einem Differential einer angetriebenen Achse zu schalten.

Kupplungsanordnungen der eingangs genannten Art sind jedoch auch für das Halten von Bremsen und/oder Parksperren geeignet.

Die Kupplung der Kupplungsanordnung ist vorzugsweise als Reibkupplung ausgebildet, insbesondere als nasslaufende Lamellenkupplung. Die Kupplung kann jedoch auch als trockene Reibkupplung ausgebildet sein.

In Kraftfahrzeugantriebssträngen werden Kupplungsanordnungen der oben genannten Art in der Regel automatisiert mittels Aktuatoranordnungen betätigt.

Aus der EP 1 388 682 A1 ist eine Drehmomentübertragungsvorrichtung bekannt, die eine Kupplungseinrichtung, eine Betätigungsvorrichtung und wenigstens eine Antriebseinrichtung aufweist. Die Betätigungsvorrichtung ist mit einem Arretiermechanismus versehen, um hohe Belastungen des Einrücklagers und der Antriebseinrichtung zu vermeiden.

Die Vorrichtungen zum Einrichten und Lösen der Arretiereinrichtungen sind jedoch relativ komplex. Es ist daher eine Aufgabe der Erfindung, eine verbesserte Kupplungsanordnung sowie einen verbesserten Antriebsstrang und ein verbessertes Verfahren zum Betätigen einer Kupplungsanordnung anzugeben, die weniger komplex realisierbar sind.

Diese Aufgabe wird bei der eingangs genannten Kupplungsanordnung dadurch gelöst, dass die Arretiereinrichtung eine Kulissenführung mit einem ersten Führungsabschnitt und einem zweiten Führungsabschnitt für den Aktuatorabschnitt aufweist, wobei die Arretierposition aus der ersten Aktuatorposition über den ersten Führungsabschnitt erreichbar ist, und wobei die erste Aktuatorposition aus der Arretierposition über den zweiten Führungsabschnitt erreichbar ist.

Das Arretieren des Aktuatorabschnittes in der Arretierposition kann generell über die Kulissenführung selbst erfolgen.

Da jedoch vorzugsweise relativ hohe Kräfte (beispielsweise bis zu 20 kN) auf die Arretiereinrichtung wirken, weist die Arretiereinrichtung eine mechanische Sperreinrichtung zum Arretieren des Aktuatorabschnittes auf, die getrennt von der Kulissenführung ausgebildet ist.

Hierdurch kann die mechanische Sperreinrichtung fester bzw. massiver ausgebildet werden, um den hohen Kräften bei Einrichten der Arretierposition widerstehen zu können. Die Kulissenführung muss in diesem Fall nur die für die Relativbewegung erforderlichen Kräfte aufnehmen und kann insofern kompakter und leichter ausgebildet werden.

Ferner wird die obige Aufgabe gelöst durch einen Kraftfahrzeugantriebsstrang mit einer derartigen Kupplungsanordnung.

Schließlich wird die obige Aufgabe gelöst durch ein Verfahren zum Betätigen einer Kupplungsanordnung der oben beschriebenen Art, wobei die Kupplungsanordnung eine Kupplung, eine Aktuatoranordnung zum automatisierten Betätigen der Kupplung sowie eine Arretiereinrichtung zum Arretieren eines Aktuatorabschnittes der Aktuatoranordnung in einer Arretierposition aufweist, mit den Schritten, den Aktuatorabschnitt zum Einrichten der Arretierposition in einer Vorwärtsrichtung über eine Schließposition, ab der die Kupplung geschlossen ist, hinaus zu bewegen.

Durch die Maßnahme, der Arretiereinrichtung eine Kulissenführung zuzuweisen, die unterschiedliche Führungsabschnitte aufweist, ist es möglich, dass die Vorgänge des Einrichtens der Arretierposition und des Verlassens der Arretierposition unterschiedlich realisiert werden. Hierdurch können unerwünschte Hysterese-Erscheinungen beim Einrichten bzw. Verlassen der Arretierposition vermieden werden.

Die Kupplung ist insbesondere eine Reibkupplung, beispielsweise eine nasslaufende Lamellenkupplung oder eine trockene Reibkupplung. Als Reibkupplung ist die Kupplung vorzugsweise als lastschaltbare Kupplung ausgelegt, so dass die Kupplung geöffnet oder geschlossen werden kann, auch wenn ein Drehmoment anliegt.

Ferner ist die Kupplung vorzugsweise eine normalerweise (drucklos) offene Kupplung, die mittels der Aktuatoranordnung durch Aufbringen einer Aktuatorkraft in die geschlossene Position versetzbar ist.

In der Arretierposition wird die Kupplung geschlossen gehalten. Dies hat den Vorteil, dass bei einer normalerweise offenen Kupplung ein Betriebszustand erreichbar ist, bei dem die Kupplung geschlossen ist und gleichzeitig der Aktuatoranordnung keine oder eine minimale Energie zuzuführen ist.

Die Arretierposition ist vorzugsweise selbsthaltend und kann dabei vorzugsweise kupplungstypische Kräfte aufnehmen (beispielsweise bis 5, vorzugsweise bis 10, insbesondere bis ca. 25 kN). Ferner ist die Arretiereinrichtung vorzugsweise dazu ausgelegt, auch höherfrequenten Schwingungen (bis beispielsweise 20 kHz) um diese Kraft herum standzuhalten, wie sie typischerweise in der Umgebung von Antriebssträngen von Kraftfahrzeugen auftreten.

Die Kulissenführung ist vorzugsweise an einem von dem Aktuatorabschnitt separaten Bauelement der Arretiereinrichtung ausgebildet. Ferner greift vorzugsweise ein Mitnehmer des Aktuatorabschnittes in die Kulissenführung.

Die Kulissenführung ist dabei vorzugsweise so ausgelegt, dass die Arretierposition aus der ersten Aktuatorposition nur über den ersten Führungsabschnitt erreichbar ist, und umgekehrt die erste Aktuatorposition aus der Arretierposition nur über den zweiten Führungsabschnitt erreichbar ist.

Die Kupplung kann beispielsweise als Anfahrkupplung zwischen einem Antriebsmotor und einem Stufengetriebe des Kraftfahrzeugantriebsstranges angeordnet sein. Alternativ kann die Kupplung als lastschaltbare Schaltkupplung vorgesehen sein, die eine Verbindung zwischen einer Welle und einem drehbar an dieser Welle gelagerten Losrad herstellen kann, insbesondere nach der Art, wie es in dem Dokument DE 199 17 724 A1 beschrieben ist, auf dessen Offenbarungsgehalt vorliegend vollumfänglich Bezug genommen wird. Die in diesem Dokument beschriebene Arretiereinrichtung ist nicht für hohe Kräfte geeignet.

Alternativ kann die Kupplung jedoch auch dazu dienen, eine Bremse oder eine Parksperre in eine Arretierposition zu bringen. Ferner ist es möglich, die Wirkrichtung kinematisch umzukehren, indem die Kupplung in einer ersten Aktuatorposition eines Aktuatorabschnittes der Aktuatoranordnung geschlossen ist und in der Arretierposition des Aktuatorabschnittes geöffnet ist.

Bei dem erfindungsgemäßen Verfahren ist es von Vorteil, wenn die Arretierposition allein durch Bewegen des Aktuatorabschnittes über die Schließposition hinaus eingerichtet werden kann, so dass die Arretierposition einfach eingerichtet werden kann, ohne dass eine Umkehr der Bewegung des Aktuatorabschnittes durch Aufbringen einer umgekehrten Aktuatorkraft erforderlich ist.

Bei dem erfindungsgemäßen Verfahren ist der Aktuatorabschnitt vorzugsweise über eine Federanordnung mit der Kupplung gekoppelt, so dass der Schritt des Bewegens in Vorwärtsrichtung über die Schließposition hinaus durch ein Überdrücken der Federanordnung erzielbar ist.

Die Aufgabe wird somit vollkommen gelöst.

Bei der erfindungsgemäßen Kupplungsanordnung ist es von Vorteil, wenn der erste Führungsabschnitt und der zweite Führungsabschnitt eine Herzkulisse bilden.

Eine derartige Herzkulisse wird beispielsweise auf dem Gebiet der Kugelschreibertechnik verwendet und ist beispielhaft beschrieben in dem Dokument DE 20 2008 013 348 U1, auf dessen Offenbarungsgehalt vorliegend Bezug genommen wird.

Gemäß einer alternativen Ausführungsform sind der erste und der zweite Führungsabschnitt jeweils L-förmig ausgebildet und seitlich nebeneinander angeordnet.

Bei dieser Ausführungsform ergibt sich in Querrichtung der Führungsabschnitte eine kompaktere Bauweise. Ferner kann bei dieser Ausführungsform auch bei einer höheren Überdrückung eine bessere Sicherheit gegenüber Schwingungen erzielt werden.

Gemäß einer weiteren Ausführungsform weist die Arretiereinrichtung eine Kulissenführung für den Aktuatorabschnitt auf, die einen im Wesentlichen axial ausgerichteten ersten Führungskanal, einen sich daran anschließenden und im Wesentlichen quer ausgerichteten zweiten Führungskanal sowie einen sich an den zweiten Führungskanal anschließenden, im Wesentlichen axial ausgerichteten dritten Führungskanal aufweist.

Der erste und der dritte Führungskanal überschneiden sich dabei vorzugsweise in Längsrichtung zumindest teilweise.

Bei dieser Ausgestaltung kann die Arretierposition eingerichtet werden, indem ausgehend von der ersten Aktuatorposition zunächst der erste Führungskanal durchlaufen wird, anschließend der zweite Führungskanal und schließlich zum Einrichten der Arretierposition der dritte Führungskanal (der dritte Führungskanal in der entgegengesetzten Richtung wie der erste Führungskanal). Dabei kann die Arretierposition im Bereich des dritten Führungskanals eingerichtet sein.

Der Überschneidungsbereich zwischen dem ersten Führungskanal und dem dritten Führungskanal kann dabei einem Überdrückungsbereich entsprechen bzw. dem Bereich der Vorwärtsrichtung über die Schließposition hinaus.

Die Arretierposition kann im Bereich des dritten Führungskanals liegen und kann innerhalb dieses Bereiches sicher gehalten werden, selbst bei Vibrationen im Bereich der Kulissenführung.

Der zweite Führungskanal, der im Wesentlichen quer ausgerichtet ist, ist dabei vorzugsweise gegenüber dem ersten Führungskanal schräg ausgerichtet, vorzugsweise unter einem stumpfen Winkel größer 90°. Daher ist es möglich, dass sich die Kulissenführung relativ zu dem Aktuatorabschnitt selbsttätig verdreht, wenn ein Mitnehmer von dem ersten Führungskanal in Vorwärtsrichtung in den zweiten Führungskanal gedrückt wird. Durch diese Ausgestaltung ist es möglich, mittels einer reinen Vorwärtsbewegung des Aktuatorabschnittes ein Ende des zweiten Führungskanals zu erreichen, so dass bei einem Abschalten der Aktuatorkraft eine Bewegung eines Mitnehmers des Aktuatorabschnittes entweder durch den Aktuatorantrieb oder vorzugsweise durch eine Federanordnung in Rückwärtsrichtung in den dritten Führungskanal hinein möglich ist.

Gemäß einer weiteren bevorzugten Ausführungsform ist der Aktuatorabschnitt der Aktuatoranordnung ein Andruckabschnitt, der über eine Federanordnung mit der Kupplung gekoppelt ist.

Der Aktuatorabschnitt ist dabei vorzugsweise ein Bauteil, über das die Aktuatorkraft von einem Aktuatorantrieb hin zu der Kupplung übertragen wird. Durch die Anordnung der Federanordnung zwischen dem Andruckabschnitt und der Kupplung ist es dabei möglich, den Andruckabschnitt gegen eine elastische Auslenkung der Federanordnung in einer Vorwärtsrichtung über eine Schließposition, ab der die Kupplung geschlossen ist, hinaus zu bewegen.

Weiterhin ist es bevorzugt, wenn der Aktuatorabschnitt in Umfangsrichtung mit einem Drehglied der Kupplung gekoppelt ist und ferner über ein Axiallager mit einem Aktuatorantrieb gekoppelt ist.

Bei dieser Ausführungsform ist der Aktuatorabschnitt so ausgebildet, dass er beispielsweise als ein an einer Welle drehbares Teil ausgebildet sein kann, das in Umfangsrichtung bzw. Drehrichtung starr mit einem Drehglied der Kupplung gekoppelt ist, das ebenfalls drehbeweglich in Bezug auf die Welle gelagert ist.

Durch die Maßnahme, den Aktuatorabschnitt ferner über ein Axiallager mit einem Aktuatorantrieb zu koppeln, kann der Aktuatorantrieb stationär, beispielsweise gehäusefest, ausgebildet sein.

Der Aktuatorantrieb kann dabei ein hydraulischer Antrieb sein, kann jedoch auch ein elektromotorischer oder ein elektromagnetischer Antrieb sein.

Es ist insgesamt ferner vorteilhaft, wenn der Aktuatorabschnitt ein erstes Hülsenelement aufweist, das konzentrisch zu einer Längsachse der Kupplung angeordnet ist.

Durch die Ausgestaltung als Hülsenelement kann dieses auf einfache Weise konzentrisch zu der Längsachse der Kupplung angeordnet sein, insbesondere als Hülse um eine Welle eines Antriebsstranges herum.

In entsprechender Weise ist es bevorzugt, wenn die Kulissenführung an einem zweiten Hülsenelement ausgebildet ist, das konzentrisch zu einer Längsachse der Kupplung angeordnet ist.

Das zweite Hülsenelement und das erste Hülsenelement sind dabei nach der Art von Innenhülse und Außenhülse konzentrisch zueinander angeordnet, so dass eine Relativbeweglichkeit zwischen erstem und zweitem Hülsenelement auf einfache Weise durch die Kulissenführung vorgegeben werden kann.

Das erste Hülsenelement ist dabei als Andruckabschnitt in einer axialen Richtung beweglich gelagert. Das zweite Hülsenelement ist dabei vorzugsweise in axialer Richtung festgelegt.

Besonders bevorzugt ist es dabei, wenn das zweite Hülsenelement drehbar an einer Welle gelagert ist.

Bei dieser Ausführungsform kann sich das zweite Hülsenelement relativ zu der Welle verdrehen. Ferner ist es bevorzugt, wenn eine Relativverdrehbarkeit (im Rahmen der Kulissenführung) zwischen dem ersten und dem zweiten Hülsenelement eingerichtet ist.

Von besonderem Vorzug ist es, wenn der Aktuatorabschnitt der Aktuatoranordnung einen Verzahnungsabschnitt aufweist, der in der Arretierposition eine axial festgelegte Gegenverzahnung der Arretiereinrichtung hintergreift.

Durch eine solche Verzahnung ist es möglich, die relativ hohen Axialkräfte in der Arretierposition aufzunehmen.

Ferner kann eine solche Verzahnung so ausgebildet sein, dass eine durch die Kulissenführung vorgegebene axiale Relativbewegung zwischen Verzahnungsabschnitt und Gegenverzahnung sowie eine durch die Kulissenführung gegebenenfalls vorgegebene Relativbewegung in Umfangsrichtung möglich ist.

Die Gegenverzahnung ist dabei vorzugsweise an dem zweiten Hülsenelement ausgebildet, an dem auch die Kulissenführung ausgebildet ist.

Insgesamt ist es ferner vorteilhaft, wenn die Arretiereinrichtung konzentrisch und radial innerhalb der Kupplung angeordnet ist.

Auf diese Weise kann eine axial kompakte Bauweise erzielt werden.

Gemäß einer weiteren, insgesamt bevorzugten Ausführungsform ist die Arretiereinrichtung in einen Aktuatorantrieb integriert, insbesondere in einen Hydraulikzylinder.

Generell ist es zwar auch möglich, die Arretiereinrichtung mit einem Elektromotorantrieb zu kombinieren. Im Falle eines Hydraulikzylinders als Aktuatorantrieb lässt sich die Arretiereinrichtung jedoch vorzugsweise im Inneren des Zylindergehäuses des Hydraulikzylinders aufnehmen. Die Kulissenführung ist dabei vorzugsweise innerhalb des Zylindergehäuses angeordnet. Vorzugsweise ist ein Andruckabschnitt dabei starr mit einem Kolben des Hydraulikzylinders verbunden, und ein Führungselement ist vorzugsweise axial an dem Zylindergehäuse gelagert. Die Kulissenführung ist dabei vorzugsweise zwischen dem Andruckabschnitt und dem Führungselement ausgebildet, wobei das Führungselement als Hülsenelement ausgebildet sein kann.

Durch diese Bauform kann eine besonders kompakte Kupplungsanordnung realisiert werden.

Bei dem erfindungsgemäßen Verfahren ist es bevorzugt, wenn der Aktuatorabschnitt zum Verlassen der Arretierposition zunächst in die Vorwärtsrichtung bewegt wird.

Hierdurch ist es beispielsweise möglich, einen Verzahnungseingriff zwischen einem Verzahnungsabschnitt und einer Gegenverzahnung zu lösen.

Ferner ist es bei dem erfindungsgemäßen Verfahren bevorzugt, wenn der Aktuatorabschnitt der Aktuatoranordnung zum Einrichten und/oder zum Verlassen der Arretierposition mittels einer Kulissenführung geführt wird, wie sie oben beschrieben wurde.

Bei dem erfindungsgemäßen Antriebsstrang handelt es sich vorzugsweise um einen Antriebsstrang, wie er dem Grunde nach in dem Dokument DE 199 17 724 A1 beschrieben worden ist. Bei einem derartigen Antriebsstrang mit einem Elektromotor als Antriebsmotor können mittels zweier Kupplungen zwei unterschiedliche Übersetzungen eingerichtet werden. Eine der Übersetzungen ist dabei eine normalerweise während eines Großteils des üblichen Fahrbetriebs eingerichtete Gangstufe, wohingegen die andere Gangstufe in der Regel nur in Sondersituationen (beispielsweise Beschleunigen am Hang oder Ähnliches) zum Tragen kommt.

Bei einem derartigen Antriebsstrang ist es bevorzugt, wenn jene Kupplung, die der üblicherweise verwendeten Gangstufe zugeordnet ist, als erfindungsgemäße Kupplungsanordnung mit einer Arretierfunktion ausgebildet ist. Daher kann ein Fahrbetrieb überwiegend ohne oder nur mit geringer Zufuhr von Energie zu der Aktuatoranordnung realisiert werden. Die andere Kupplung, die der weniger verwendeten Gangstufe zugeordnet ist, ist in diesem Fall vorzugsweise ohne Arretierfunktion ausgebildet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch eine erste Ausführungsform einer erfindungsgemäßen Kupplungsanordnung;
- Fig. 2: eine schematische Schnittansicht entlang der Linie II-II der Fig. 1;
- Fig. 3: eine der Fig. 2 vergleichbare Schnittansicht einer alternativen Ausführungsform einer Kulissenführung;
- Fig. 4: eine der Fig. 3 entsprechende schematische Ansicht mit einer weiteren Ausführungsform einer Kulissenführung;
- Fig. 5: eine der Fig. 2 entsprechende schematische Schnittansicht mit einer weiteren Ausführungsform einer Kulissenführung;
- Fig. 6: eine schematische Längsschnittansicht durch eine weitere Ausführungsform einer erfindungsgemäßen Kupplungsanordnung;
- Fig. 7: eine schematische Längsschnittansicht durch eine weitere Ausführungsform einer erfindungsgemäßen Kupplungsanordnung;
- Fig. 8: eine schematische Längsschnittansicht durch eine weitere Ausführungsform einer erfindungsgemäßen Kupplungsanordnung;
- Fig. 9: eine schematische Längsschnittansicht durch eine weitere Ausführungsform einer erfindungsgemäßen Kupplungsanordnung;
- Fig. 10: eine schematische Längsschnittansicht durch eine weitere Ausführungsform einer erfindungsgemäßen Kupplungsanordnung;
- Fig. 11: eine schematische Längsschnittansicht durch einen Aktuatorantrieb einer weiteren Ausführungsform einer erfindungsgemäßen Kupplungsanordnung;
- Fig. 12: eine schematische Längsschnittansicht durch eine weitere Ausführungsform einer erfindungsgemäßen Kupplungsanordnung; und
- Fig. 13: eine schematische Längsschnittansicht durch eine weitere Ausführungsform einer erfindungsgemäßen Kupplungsanordnung.

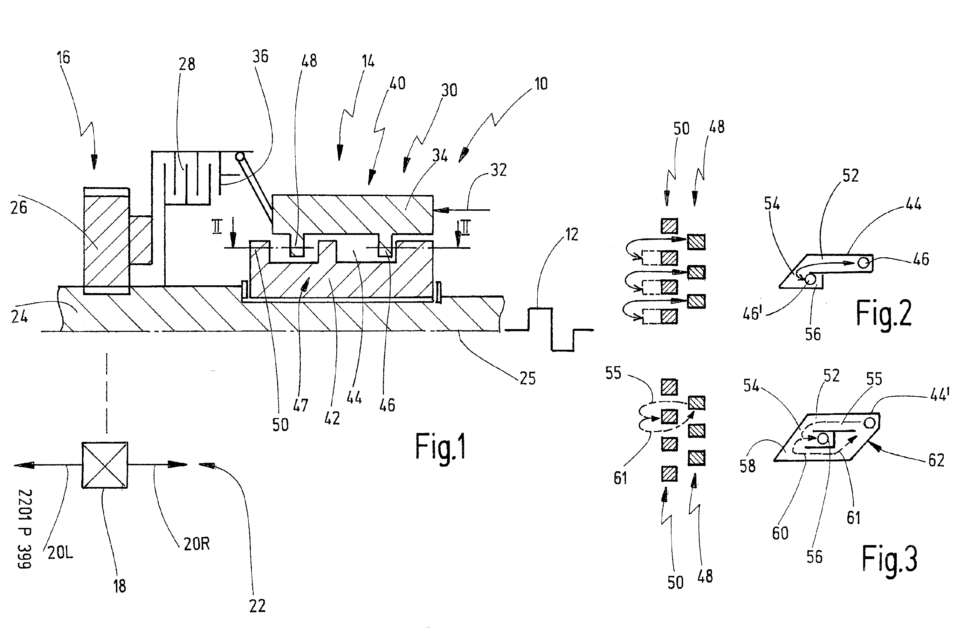

In Fig. 1 ist ein Antriebsstrang für ein Kraftfahrzeug in Form eines schematischen Längsschnittes dargestellt und generell mit 10 bezeichnet.

Der Antriebsstrang 10 weist einen Antriebsmotor 12 wie einen Verbrennungsmotor oder einen Elektromotor, eine Kupplungsanordnung 14, ein Stufengetriebe 16 sowie ein Differential 18 auf. Eine Antriebswelle des Antriebsmotors 12 ist mit einem nicht näher bezeichneten Eingangsglied der Kupplungsanordnung 14 verbunden. Ein Ausgangsglied der Kupplungsanordnung 14 ist mit einem Eingang des Stufengetriebes 16 verbunden. Ein Ausgang des Stufengetriebes 16 ist mit einem Eingangsglied des Differentials 18 verbunden. Das Differential 18 verteilt die Antriebsleistung auf Antriebswellen 20L, 20R der angetriebenen Achse 22 des Antriebsstranges 10.

Die Kupplungsanordnung 14 ist an einer Welle 24 angeordnet, die eine Längsachse 25 definiert. An der Welle 24 ist ein Losrad 26 drehbar gelagert, das beispielsweise mit einem Festrad einer weiteren Welle in Verbindung steht und hierdurch eine Übersetzung des Stufengetriebes 16 einrichtet. Das Eingangsglied der Kupplungsanordnung 14 ist mit der Welle 24 verbunden, das Ausgangsglied mit dem Losrad 26.

Die Kupplungsanordnung 14 weist eine Reibkupplung in Form einer nasslaufenden Lamellenkupplung 28 auf. Die Kupplung 28 ist mittels einer Aktuatoranordnung 30 automatisiert betätigbar. Die Aktuatoranordnung 30 weist hierzu einen schematisch angedeuteten Aktuatorantrieb 32 auf, der beispielsweise durch einen Hydraulikantrieb (Kolben/Zylinder-Anordnung), durch einen Elektromotor oder durch eine Elektromagnetanordnung gebildet sein kann. Der Aktuatorantrieb 32 erzeugt eine Aktuatorkraft, die im Wesentlichen parallel zu der Längsachse 25 gerichtet ist.

Ferner beinhaltet die Aktuatoranordnung 30 einen Aktuatorabschnitt, der als Andruckabschnitt 34 ausgebildet ist. Der Andruckabschnitt 34 ist als erster Hülsenabschnitt ausgebildet, der konzentrisch um die Welle 24 herum angeordnet ist. Ferner ist der Andruckabschnitt 34 über eine mechanische Federanordnung 36, beispielsweise in Form einer Ring- oder Tellerfeder, mit der Kupplung 28 gekoppelt.

Die Kupplung 28 ist als normalerweise offene Kupplung ausgebildet, wobei die Federanordnung 36 vorzugsweise so ausgebildet ist, dass sie das Lamellenpaket der Reibkupplung 28 entlastet, um die Reibkupplung 28 zu öffnen. Zum Schließen der Reibkupplung 28 ist eine Aktuatorkraft aufzubringen, die über den Andruckabschnitt 34 auf die Federanordnung 36 wirkt und hierbei die Lamellen des Lamellenpaketes der Kupplung 28 zusammendrückt.

Ferner beinhaltet die Kupplungsanordnung 14 eine Arretiereinrichtung 40. Die Arretiereinrichtung 40 weist ein zweites Hülsenelement 42 auf. Das zweite Hülsenelement 42 ist konzentrisch zu der Welle 24 angeordnet, und zwar in radialer Richtung zwischen der Welle 24 und dem Andruckabschnitt 34. Das zweite Hülsenelement 42 ist an der Welle 24 drehbar gelagert und durch nicht näher bezeichnete Axiallager in Längsrichtung gegenüber der Welle 24 fixiert.

An dem zweiten Hülsenelement 42, vorzugsweise an einem Außenumfang des zweiten Hülsenelementes 42, ist eine Kulissenführung 44 ausgebildet. In die Kulissenführung 44 greift ein Mitnehmer des Andruckabschnittes 34, der vorzugsweise als sich radial nach innen erstreckender Stift 46 ausgebildet ist.

Die Arretiereinrichtung 40 beinhaltet ferner eine mechanische Sperreinrichtung 47, die dazu ausgelegt ist, den Andruckabschnitt 34 in einer noch zu beschreibenden Arretierposition in axialer Richtung gegenüber dem zweiten Hülsenelement 42 festzulegen und dabei relativ hohe Kräfte in Längsrichtung aufzunehmen. Die mechanische Sperreinrichtung 47 ist separat von der Kulissenführung 44 und dem Stift 46 vorgesehen. Vorzugsweise ist die mechanische Sperreinrichtung 47 durch einen Verzahnungseingriff zwischen einem Verzahnungsabschnitt 48 des Andruckabschnittes 34 sowie eine Gegenverzahnung 50 gebildet, die vorzugsweise an dem zweiten Hülsenelement 42 ausgebildet ist.

Der Andruckabschnitt 34 ist relativ zu dem zweiten Hülsenelement 42 generell in axialer Richtung und in Drehrichtung verschieblich gelagert. Die Relativbeweglichkeit zwischen dem Andruckabschnitt 34 und dem zweiten Hülsenelement 42 wird folglich im Wesentlichen durch die Kulissenführung 44 bestimmt.

Fig. 2 zeigt eine schematische Schnittansicht in Form einer Abwicklung entlang der Linie II-II der Fig. 1.

Man erkennt zunächst, dass die Kulissenführung 44 im Wesentlichen L-förmig ausgebildet ist und bei dieser Ausführungsform einen ersten in Längsrichtung ausgerichteten Führungskanal 52 sowie einen sich an den ersten Führungskanal 52 anschließenden zweiten Führungskanal 54 aufweist, der sich im Wesentlichen quer zu dem ersten Führungskanal 52 erstreckt, vorzugsweise unter einem stumpfen Winkel > 90° und < 180° in Bezug auf den ersten Führungskanal 52.

Ferner beinhaltet die Kulissenführung 44 bei dieser ersten Ausführungsform einen dritten Führungskanal 56, der wiederum in Längsrichtung ausgerichtet ist und sich an dem zweiten Führungskanal 54 anschließt, und zwar derart, dass er sich mit dem ersten Führungskanal 52 zumindest teilweise überlappt.

Ferner ist in Fig. 2 der Stift 46 gezeigt, der innerhalb der Kulissenführung 44 beweglich ist. In Fig. 2 ist bei 46 der Führungsstift dabei in einer ersten Aktuatorposition des Andruckabschnittes 34 gezeigt, bei der die Kupplung 28 geöffnet ist. Zum Schließen der Kupplung wird der Andruckabschnitt 34 in axialer Richtung bewegt, wobei der Stift 46 sich dabei zunächst innerhalb des ersten Führungskanals 52 in Längsrichtung bewegt. Etwa auf der Höhe des Überschneidungsbereiches zwischen dem ersten und dem dritten Führungskanal 52, 56 ist die Kupplung 28 geschlossen. Unter einer geschlossenen Kupplung soll vorliegend verstanden werden, dass die Kupplung ein Moment übertragen kann, das für den jeweiligen Anwendungsfall unterschiedlich groß sein kann. Vorzugsweise wird unter der geschlossenen Position verstanden, dass die Reibkupplung ihr maximal zulässiges Moment übertragen kann.

Wenn der Stift 46 den Übergang zu dem zweiten Führungskanal 54 erreicht (wobei die Federanordnung 36 überdrückt wird), wird das zweite Hülsenelement 42 relativ zu dem Andruckabschnitt 34 verdreht, bis der Stift 46 mit dem dritten Führungskanal 56 ausgerichtet ist. Zum Einrichten einer Arretierposition gelangt der Stift 46 dann in Rückwärtsrichtung in die Nähe eines Endes des dritten Führungskanals 56, und zwar in einer Position, die in Vorwartsrichtung gesehen mindestens der geschlossenen Position entspricht. Dies ist in Fig. 2 bei 46' gezeigt.

Fig. 2 zeigt ferner den Verzahnungsabschnitt 48 und die Gegenverzahnung 50. Es ist zu erkennen, dass bei Bewegung des Stiftes 46 innerhalb des ersten Führungskanals 52 die Zähne des Verzahnungsabschnittes 48 durch die Gegenverzahnung 50 hindurchgeführt werden, um anschließend durch die Relativverdrehung hinter die Gegenverzahnung zu gelangen. Durch Rückwärtsbewegung des Stiftes 46 innerhalb des dritten Führungskanals 56 hin zu der Position 46' gelangen der Verzahnungsabschnitt 48 und die Gegenverzahnung 50 in Anlage. Mit anderen Worten hintergreift der Verzahnungsabschnitt 48 die Gegenverzahnung 50. Dies hat zur Folge, dass der Stift 46 innerhalb des dritten Führungskanals 56 nicht bis zu dessen Ende geführt wird, so dass der Stift 46 in der Arretierposition keine Axialkräfte übernehmen muss. Die Arretierposition des Verzahnungsabschnittes 48 ist in Fig. 2 gestrichelt dargestellt.

Zum Verlassen der Arretierposition wird der Andruckabschnitt 34 zunächst in Vorwärtsrichtung bewegt und anschließend zurück zu der Position 46.

Fig. 3 zeigt eine der Fig. 2 vergleichbare Ansicht einer alternativen Ausführungsform einer Kulissenführung. Die in Fig. 3 gezeigte Kulissenführung 44' ist als Herzkulisse ausgebildet. Die Herzkulisse 44' beinhaltet dabei Führungskanäle 52-56, wie die Kulissenführung 54 der Fig. 2. In Querrichtung ist die Kulisse 44' jedoch erweitert um einen vierten Führungskanal 58, der sich an den zweiten Führungskanal 54 anschließt und ebenfalls quer ausgerichtet ist. An den vierten Führungskanal 58 schließt sich ein fünfter Führungskanal 60 an, der etwa parallel verläuft zu dem ersten Führungskanal 52 und zu dem dritten Führungskanal 56, und der über einen nicht näher bezeichneten schrägen Kanal wieder in den ersten Führungskanal 52 mündet. Das Einrichten der Arretierposition erfolgt genauso wie bei der Ausführungsform der Fig. 2. Zum Verlassen der Arretierposition wird der Andruckabschnitt 34 zunächst wieder in Vorwärtsrichtung bewegt, so dass sich der Stift 46 aus dem dritten Führungskanal 56 heraus bewegt und in Anlage gelangt an den vierten Führungsabschnitt 58, wodurch sich das zweite Hülsenelement 42 weiter verdreht, bis der Stift 46 mit dem vierten Führungskanal 58 ausgerichtet ist. Wenn anschließend die Aktuatorkraft unterbrochen wird, bewegt sich der Stift 46 innerhalb des fünften Führungskanals 60 zurück zu der Ausgangsposition in dem ersten Führungskanal 52. Die entsprechende Relativbewegung zwischen dem Verzahnungsabschnitt 48 und der Gegenverzahnung 50 ist in Fig. 3 links gezeigt.

Man erkennt dabei, dass die Herzkulisse 44' einen ersten Führungsabschnitt 55 definiert, über den die Arretierposition aus der ersten Aktuatorposition erreichbar ist. Ein hiervon unterschiedlicher zweiter Führungsabschnitt 61 ist durch die Herzkulisse 44' definiert, über die die erste Aktuatorposition aus der Arretierposition erreichbar ist.

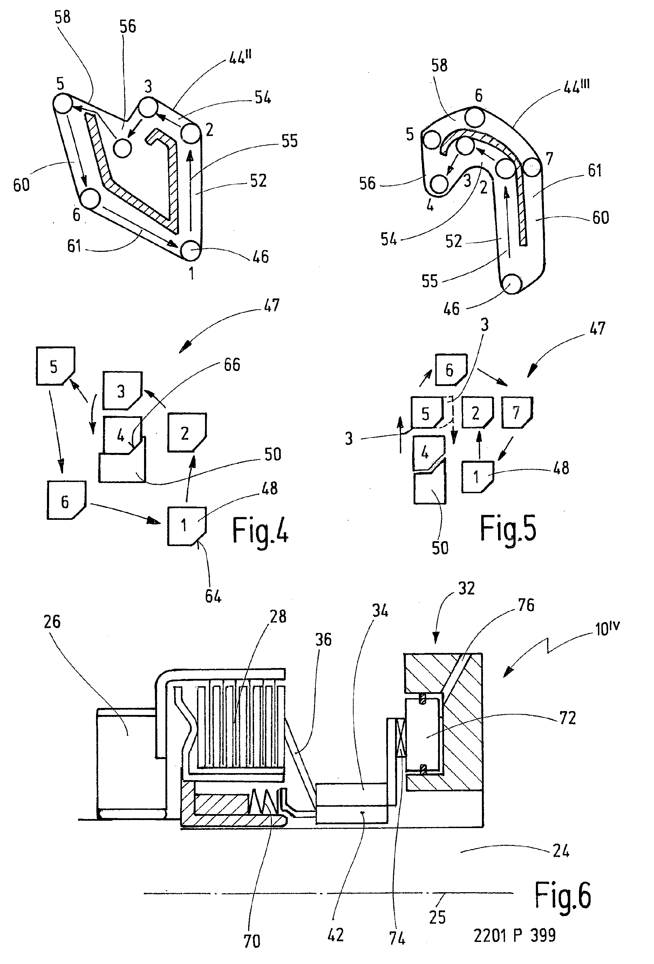

In den nachfolgenden Fig. 4 bis 11 werden weitere Ausführungsformen von Kupplungsanordnungen und Verfahren zu deren Betätigung beschrieben, die hinsichtlich Aufbau und Funktionsweise generell den oben in Bezug auf die Fig. 1 bis 3 gezeigten Kupplungsanordnungen entsprechen. Gleiche Elemente sind daher durch gleiche Bezugszeichen gekennzeichnet. Im Folgenden werden im Wesentlichen die Unterschiede erläutert.

Bei der Kulissenführung 44" der Fig. 4 ist der dritte Führungskanal 56 ebenfalls leicht schräg ausgebildet, und der Übergang zwischen dem dritten Führungskanal 56 und dem vierten Führungskanal 58 ist mit einer herzförmigen Spitze ausgebildet, so dass die Unidirektionalität der Führungsabschnitte 55, 61 gewährleistet ist.

In Fig. 4 ist ferner gezeigt, dass der Stift 46 innerhalb der Herzkulisse 44" zunächst von einer ersten Aktuatorposition 1 in eine zweite Aktuatorposition 2 gelangt, die das Ende des ersten Führungskanals 52 darstellt. Von hier aus gelangt der Stift 46 über den zweiten Führungskanal 54 in die Position 3, und von dort über den dritten Führungskanal 56 in die Position 4. Von der Position 4, die der Arretierposition entspricht, gelangt der Stift 46 über den vierten Führungskanal 58 in die Position 5, und von da aus über eine Zwischenposition 6 zurück zu der Position 1. Ferner zeigt Fig. 4, dass die einzelnen Zähne des Verzahnungsabschnittes 48 mit einer Abschrägung 64 versehen sein können, wobei die einzelnen Zähne der Gegenverzahnung 50 eine entsprechende Abschrägung 64 aufweisen. In der Arretierposition gelangen die Abschrägungen 64, 66 aneinander und verhindern auf diese Weise, dass die Verzahnungen in der Umfangsrichtung von der Position 4 in die Position 3 versetzbar sind. Hierdurch wird eine höhere Stabilität der Arretierposition erzielt.

Fig. 5 zeigt eine weitere alternative Ausführungsform einer Kulissenführung 44"', die aus zwei L-förmigen Führungsabschnitten 55, 61 besteht, die seitlich nebeneinander angeordnet sind. Hierbei gelangt der Führungsstift 46 in einem ersten Führungskanal 52 zur Position 2 und von dort über den zweiten Führungskanal 54 zur Position 3, und von dort schließlich in dem dritten Führungskanal 56 zur Arretierposition 4. Von hier aus gelangt der Stift 46 in axialer Vorwärtsrichtung zur Position 5 in den zweiten Führungsabschnitt 61, der einen parallel zum zweiten Führungskanal 54 verlaufenden vierten Führungskanal 58 aufweist. Von dort gelangt der Führungsstift 46 über die Positionen 6 und 7 zurück zur Position 1.

Die entsprechenden Relativbewegungen zwischen einem Zahn der Gegenverzahnung 50 und einem Zahn des Verzahnungsabschnittes 48 sind in Fig. 4 und 5 ebenfalls mit den entsprechenden Positionen 1 bis 7 gekennzeichnet.

Fig. 6 zeigt eine der Fig. 1 vergleichbare schematische Längsansicht einer weiteren Ausführungsform eines Antriebsstranges 10^{IV}, der hinsichtlich Aufbau und Funktionsweise dem Antriebsstrang 10 der Fig. 1 entspricht.

Bei der Ausführungsform der Fig. 6 ist der Andruckabschnitt 34 entgegen der Vorwärtsrichtung mittels einer von der Federanordnung 36 separaten Rückstellfeder 70 vorgespannt. Die Rückstellfeder 70 ist dabei radial innerhalb der Reibkupplung 28 angeordnet.

Ferner weist der Aktuatorantrieb 32 einen gehäusefesten Kolben 72 auf, der hydraulisch betätigbar ist und über ein Axiallager 74 mit dem Andruckabschnitt 34 gekoppelt ist. Eine Fluidzuführung zu einem Zylinderraum für den Kolben 72 ist bei 76 gezeigt.

Bei der Ausführungsform der Fig. 6 ist, wie bei der Ausführungsform der Fig. 1, ein Außenlamellenträger der Reibkupplung 28 mit dem Losrad 26 verbunden, und ein Innenlamellenträger ist mit der Welle 24 verbunden.

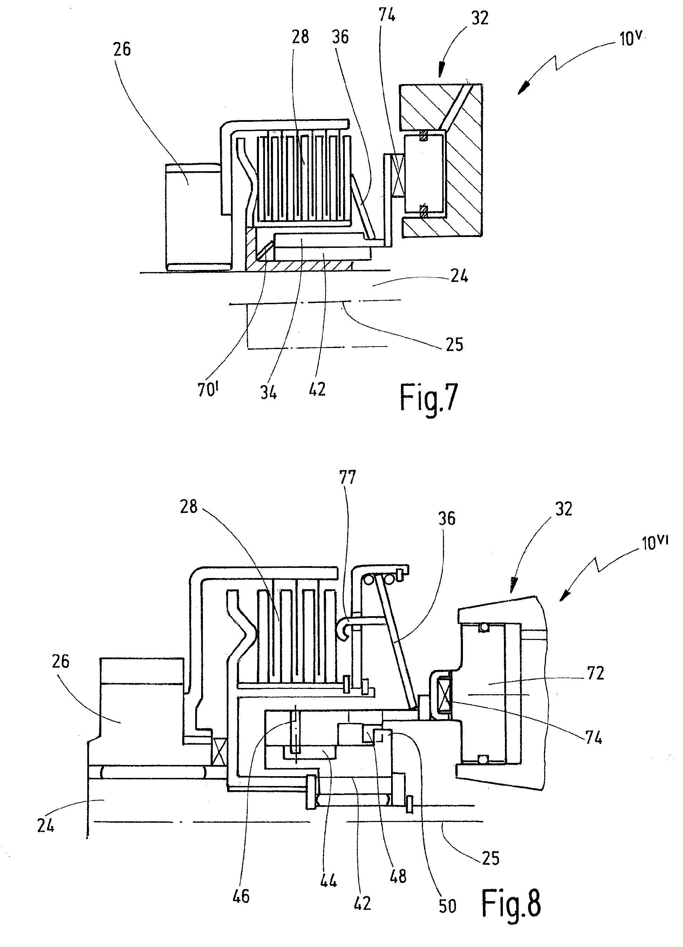

Fig. 7 zeigt eine weitere alternative Ausführungsform, die hinsichtlich Aufbau und Funktionsweise der Ausführungsform der Fig. 6 entspricht. Bei dem Antriebsstrang 10^{v} der Fig. 7 ist die Arretiereinrichtung 40 mit dem Andruckabschnitt 34 und dem zweiten Hülsenelement 42 im Wesentlichen radial innerhalb und axial ausgerichtet mit der Reibkupplung 28 angeordnet, wobei wiederum eine Rückstellfeder 70' auf den Andruckabschnitt 34 wirkt.

Die Federanordnung 36 erstreckt sich dabei zwischen einem dem Kolben 72 zugewandten Ende des Andruckabschnittes 34 und dem Lamellenpaket.

Fig. 8 zeigt einen Antriebsstrang 10^{iv}, der wiederum hinsichtlich Aufbau und Funktionsweise dem Antriebsstrang 10^{v} der Fig. 7 entspricht.

Bei dieser Ausführungsform ist näher dargestellt, dass sich die Federanordnung 36 an einem mit dem Innenlamellenträger der Reibkupplung 28 verbundenen Steg abstützt und über ein Andruckglied 77 auf das Lamellenpaket der Reibkupplung 28 wirkt.

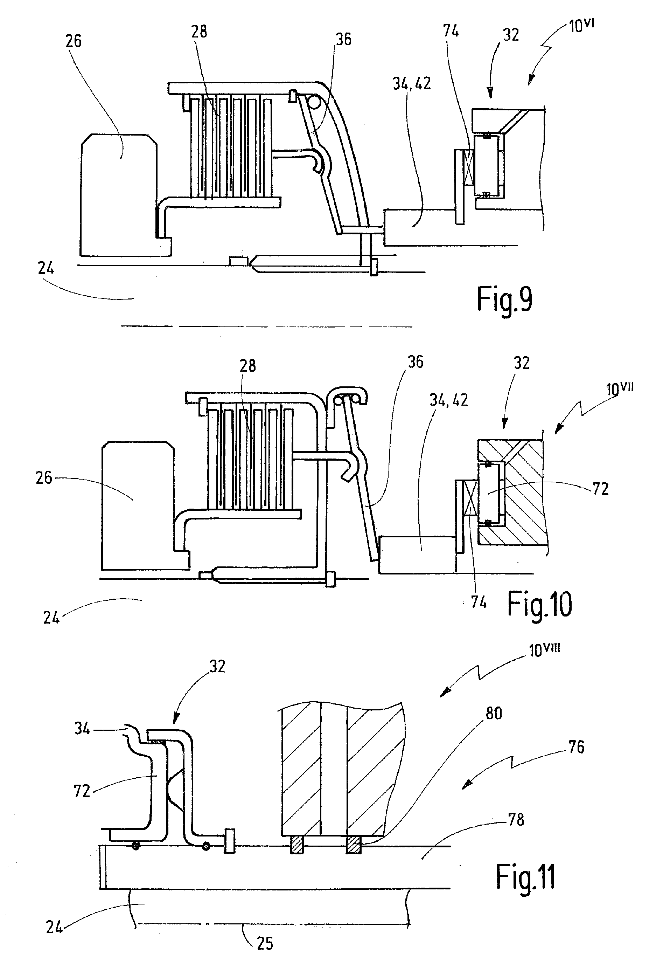

Fig. 9 zeigt eine weitere alternative Ausführungsform 10^{VI}, bei der ein Innenlamellenträger der Reibkupplung 28 mit dem Losrad 26 verbunden ist, und wobei ein Außenlamellenträger mit der Welle 24 verbunden ist. Dabei erstreckt sich die Federanordnung 36 durch einen Steg hindurch, der den Außenlamellenträger mit der Welle 24 verbindet.

Fig. 10 zeigt eine weitere alternative Ausführungsform eines Antriebsstranges 10^{VII}, die generell der Ausführungsform der Fig. 9 entspricht. Während die Federanordnung 36 bei der Ausführungsform der Fig. 9 radial innerhalb des Außenlamellenträgers angeordnet ist, ist die Federanordnung 36 bei der Ausführungsform der Fig. 10 axial benachbart zu dem Käfig angeordnet, der den Außenlamellenträger der Reibkupplung 28 mit der Welle 24 verbindet, wobei axial außen an dem Käfig ein Lager für die Federanordnung 36 ausgebildet ist.

Fig. 11 zeigt eine Ausführungsform, bei der ein Aktuatorantrieb 32 drehbar an der Welle 24 gelagert ist. Hierbei erfolgt die Zuführung von Fluid zu dem Zylinder des Kolbens 72 über eine Drehdurchführung. In diesem Fall kann der Kolben 72 auch ohne Axiallager mit dem Andruckabschnitt 34 gekoppelt sein.

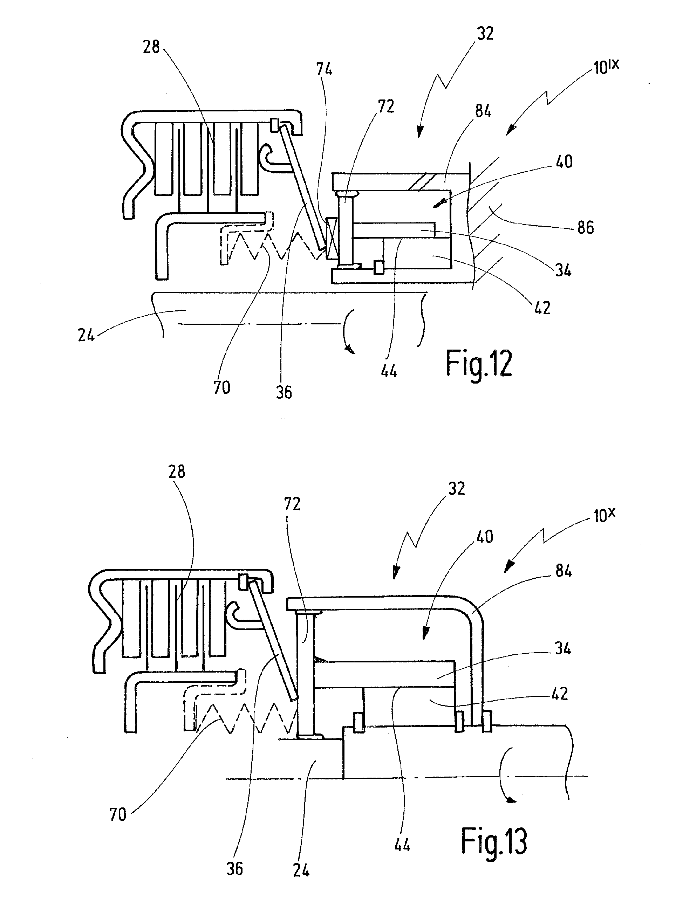

In den Fig. 12 und 13 sind weitere alternative Ausführungsformen von Antriebssträngen 10^{IX}, 10^{x} gezeigt, bei denen die Arretiereinrichtung in den Aktuatorantrieb integriert ist.

Der Antriebsstrang 10^{IX} der Fig. 12 entspricht dabei hinsichtlich Aufbau und Funktionsweise generell dem Antriebsstrang 10^{VII} der Fig. 10. Gleiche Elemente sind durch gleiche Bezugszeichen gekennzeichnet. Im Folgenden werden im Wesentlichen die Unterschiede erläutert.

Bei dem Antriebsstrang 10^{IX} der Fig. 12 ist der Aktuatorantrieb 32 durch einen (oder mehrere) Hydraulikzylinder gebildet. Der Hydraulikzylinder weist dabei ein Zylindergehäuse 84 auf, das fest an einem Antriebsstranggehäuse 86 wie einem Kupplungsgehäuse festgelegt ist. Eine Arretiereinrichtung ist im Inneren des Zylindergehäuses 84 angeordnet, wobei ein Andruckabschnitt 34 fest mit einem Kolben 72 des Hydraulikzylinders verbunden ist. Auf der Außenseite des Kolbens 72 ist ein Axiallager 74 vorgesehen, über das der Kolben 72 auf eine Federanordnung 86 wirkt, mittels der die Reibkupplung 28 betätigbar ist. Der Andruckabschnitt 34 ist über eine schematisch angedeutete Kulissenführung 44 an einem Führungselement 42 gelagert, dessen Funktion jener des zweiten Hülsenelementes 42 entspricht. Das Führungselement 42 ist innerhalb des Zylindergehäuses 84 angeordnet und ist axial an dem Zylindergehäuse 84 festgelegt.

Die Funktionsweise des Antriebsstranges 10^{IX} der Fig. 12 entspricht jener der Ausführungsform der Fig. 10.

In Fig. 12 ist ferner dargestellt, dass an einem Glied der Kupplung 28 eine Rückstellfeder 70 festgelegt sein kann, die auf das Axiallager 74 wirkt, ähnlich der Funktion der Rückstellfeder 70 der Fig. 6 und 7.

Der Antriebsstrang 10^{x} der Fig. 13 ist eine Kombination der Ausführungsformen der Fig. 11 und 12. Auch bei der Ausführungsform der Fig. 13 ist die Arretiereinrichtung 14 in einen Aktuatorantrieb 32 integriert, insbesondere im Inneren eines Zylindergehäuses 84 angeordnet, wie bei der Ausführungsform der Fig. 12. Im Unterschied zu der Ausführungsform der Fig. 12 ist das Zylindergehäuse 84 drehfest an der Welle 24 festgelegt, wobei das zweite Hülsenelement 42 axial an der Welle 24 festgelegt ist, jedoch gegenüber dieser verdrehbar ist, wie bei der Ausführungsform der Fig. 1.

Bei dieser Ausführungsform drückt der Kolben 72 des Hydraulikzylinders direkt ohne Zwischenschaltung eines Axiallagers auf die Federanordnung 36, mittels der die Kupplung 28 betätigt wird.

Wie bei der Ausführungsform der Fig. 12 kann auch hier eine Rückstellfeder 70 zwischen einem Glied der Kupplung 28 und dem Kolben 72 angeordnet sein.

Anstelle einer einzelnen Rückstellfeder 70 kann auch eine Mehrzahl von über den Umfang verteilten Rückstellfedern vorgesehen sein. Dies gilt auch für die vorangegangenen Ausführungsformen, beispielsweise auch für die Ausführungsform der Fig. 1.

Die Ausführungsformen, bei denen die Arretiereinrichtung in den Aktuatorantrieb integriert ist, sind insbesondere bei konzentrischen Doppelkupplungsanordnungen vorteilhaft. Die Kupplungen einer solchen Doppelkupplungsanordnung wie ein Doppelkupplungsgetriebe sind dabei vorzugsweise radial ineinander verschachtelt und axial etwa miteinander ausgerichtet. Die jeweiligen Hydraulikzylinder sitzen dann in axialer Richtung daneben und können ebenfalls radial verschachtelt sein und axial miteinander ausgerichtet sein.

## Patentansprüche

1. Kupplungsanordnung (14) zum Verbinden von zwei relativ zueinander drehbaren Bauteilen (24, 26) eines Kraftfahrzeugantriebsstranges (10), insbesondere zum Verbinden von zwei Wellen eines Kraftfahrzeuggetriebes (16) oder von einer Welle (24) mit einem an der Welle (24) drehbar gelagerten Losrad (26), mit einer Kupplung (28), mit einer Aktuatoranordnung (30) zum Betätigen der Kupplung (28), wobei die Kupplung (28) in einer ersten Aktuatorposition (1) eines Aktuatorabschnittes (34) der Aktuatoranordnung (30) geöffnet ist, und mit einer Arretiereinrichtung (40) zum Arretieren des Aktuatorabschnittes (34) in einer Arretierposition (4), um die Kupplung (28) geschlossen zu halten,
wobei die Arretiereinrichtung (40) eine Kulissenführung (44) mit einem ersten Führungsabschnitt (55) und einem zweiten Führungsabschnitt (61) für den Aktuatorabschnitt (34) aufweist, wobei die Arretierposition (4) aus der ersten Aktuatorposition (1) über den ersten Führungsabschnitt (55) erreichbar ist und wobei die erste Aktuatorposition (1) aus der Arretierposition (4) über den zweiten Führungsabschnitt (61) erreichbar ist,
**dadurch gekennzeichnet, dass**
die Arretiereinrichtung (40) eine mechanische Sperreinrichtung (47) zum Arretieren des Aktuatorabschnittes (34) aufweist, wobei die Sperreinrichtung (47) getrennt von der Kulissenführung (44) ausgebildet ist.

2. Kupplungsanordnung nach Anspruch 1, **dadurch gekennzeichnet, dass** der erste Führungsabschnitt (55) und der zweite Führungsabschnitt (61) eine Herzkulisse (44') bilden.

3. Kupplungsanordnung nach Anspruch 1, **dadurch gekennzeichnet, dass** der erste Führungsabschnitt (55) und der zweite Führungsabschnitt (61) jeweils L-förmig ausgebildet und seitlich nebeneinander angeordnet sind.

4. Kupplungsanordnung nach einem der Ansprüche 1 bis 3, **dadurch gekennzeichnet, dass** die Kulissenführung (44) einen im Wesentlichen axial ausgerichteten ersten Führungskanal (52), einen sich daran anschließenden und im Wesentlichen quer ausgerichteten zweiten Führungskanal (54) sowie einen sich an den zweiten Führungskanal (54) anschließenden, im Wesentlichen axial ausgerichteten dritten Führungskanal (56) aufweist.

5. Kupplungsanordnung nach einem der Ansprüche 1 bis 4, **dadurch gekennzeichnet, dass** der Aktuatorabschnitt (34) der Aktuatoranordnung (30) ein Andruckabschnitt (34) ist, der über eine Federanordnung (36) mit der Kupplung (28) gekoppelt ist.

6. Kupplungsanordnung nach einem der Ansprüche 1 bis 5, **dadurch gekennzeichnet, dass** der Aktuatorabschnitt (34) in Umfangsrichtung mit einem Drehglied der Kupplung (28) gekoppelt ist und über ein Axiallager (74) mit einem Aktuatorantrieb (32) gekoppelt ist.

7. Kupplungsanordnung nach einem der Ansprüche 1 bis 6, **dadurch gekennzeichnet, dass** der Aktuatorabschnitt (34) ein erstes Hülsenelement aufweist, das konzentrisch zu einer Längsachse (25) der Kupplung (28) angeordnet ist.

8. Kupplungsanordnung nach einem der Ansprüche 1 bis 7, **dadurch gekennzeichnet, dass** die Kulissenführung (44) an einem zweiten Hülsenelement (42) ausgebildet ist, das konzentrisch zu einer Längsachse (25) der Kupplung (28) angeordnet ist.

9. Kupplungsanordnung nach Anspruch 8, **dadurch gekennzeichnet, dass** das zweite Hülsenelement (42) drehbar an einer Welle (24) gelagert ist.

10. Kupplungsanordnung nach einem der Ansprüche 1 bis 9, **dadurch gekennzeichnet, dass** der Aktuatorabschnitt (34) der Aktuatoranordnung (30) einen Verzahnungsabschnitt (48) aufweist, der in der Arretierposition (4) eine axial festgelegte Gegenverzahnung (50) der Arretiereinrichtung (40) hintergreift.

11. Kupplungsanordnung nach einem der Ansprüche 1 bis 10, **dadurch gekennzeichnet, dass** die Arretiereinrichtung (40) konzentrisch und radial innerhalb der Kupplung (28) angeordnet ist.

12. Kupplungsanordnung nach einem der Ansprüche 1 bis 11, **dadurch gekennzeichnet, dass** die Arretiereinrichtung (40) in einen Aktuatorantrieb (32), insbesondere in einen Hydraulikzylinder (72, 84) integriert ist.

13. Kraftfahrzeugantriebsstrang (10) mit einer Kupplungsanordnung (14) nach einem der Ansprüche 1 bis 12.

14. Verfahren zum Betätigen einer Kupplungsanordnung (14), nach einem der Ansprüche 1 bis 12, mit den Schritten, den Akuatorabschnitt (34) zum Einrichten der Arretierposition (4) in einer Vorwärtsrichtung über eine Schließposition (2), ab der die Kupplung (28) geschlossen ist, hinaus zu bewegen.

15. Verfahren nach Anspruch 14, wobei der Aktuatorabschnitt (34) zum Verlassen der Arretierposition (4) zunächst in der Vorwärtsrichtung bewegt wird.

16. Verfahren nach Anspruch 14 oder 15, wobei der Aktuatorabschnitt (34) der Aktuatoranordnung (30) zum Einrichten und/oder zum Verlassen der Arretierposition (4) mittels der Kulissenführung (44) geführt wird.

## Claims

1. Clutch arrangement (14) for connecting two components (24, 26), which can rotate relative to one another, of a motor vehicle drive train (10), in particular for connecting two shafts of a motor vehicle transmission (16) or a shaft (24) to an idler gear (26) which is rotatably mounted on the shaft (24), having a clutch (28), having an actuator arrangement (30) for activating the clutch (28), wherein the clutch (28) is opened in a first actuator position (1) of an actuator section (34) of the actuator arrangement (30), and having a locking device (40) for locking the actuator section (34) in a locked position (4), in order to keep the clutch (28) closed,
wherein the locking device (40) has a slotted-link guide (44) with a first guide section (55) and a second guide section (61) for the actuator section (34), wherein the locked position (4) can be reached from the first actuator position (1) via the first guide section (55), and wherein the first actuator position (1) can be reached from the locked position (4) via the second guide section (61),
**characterized in that**
the locking device (40) has a mechanical blocking device (47) for locking the actuator section (34), wherein the blocking device (47) is formed separately from the slotted-link guide (44).

2. Clutch arrangement according to Claim 1, **characterized in that** the first guide section (55) and the second guide section (61) form a heart slotted link (44').

3. Clutch arrangement according to Claim 1, **characterized in that** the first guide section (55) and the second guide section (61) are each embodied in an L-shape and are arranged laterally one next to the other.

4. Clutch arrangement according to one of Claims 1 to 3, **characterized in that** the slotted-link guide (44) has a substantially axially oriented first guide duct (52), an adjoining, and substantially laterally oriented second guide duct (54) and a substantival axially oriented third guide duct (56) which adjoins the second guide duct (54).

5. Clutch arrangement according to one of Claims 1 to 4, **characterized in that** the actuator section (34) of the actuator arrangement (30) is a pressure section (34) which is coupled to the clutch (28) via a spring arrangement (36).

6. Clutch arrangement according to one of Claims 1 to 5, **characterized in that** the actuator section (34) is coupled to a rotary element of the clutch (28) in the circumferential direction and is coupled to an actuator drive (32) via an axial bearing (74).

7. Clutch arrangement according to one of Claims 1 to 6, **characterized in that** the actuator section (34) has a first sleeve element which is arranged concentrically with respect to a longitudinal axis (25) of the clutch (28).

8. Clutch arrangement according to one of Claims 1 to 7, **characterized in that** the slotted-link guide (44) is formed on a second sleeve element (42) which is arranged concentrically with respect to a longitudinal axis (25) of the clutch (28).

9. Clutch arrangement according to Claim 8, **characterized in that** the second sleeve element (42) is rotatably mounted on a shaft (24).

10. Clutch arrangement according to any one of Claims 1 to 9, **characterized in that** the actuator section (34) of the actuator arrangement (30) has a toothing section (48) which, in the locked position (4), engages behind an axially secured opposing toothing (50) of the locking device (40).

11. Clutch arrangement according to one of Claims 1 to 10, **characterized in that** the locking device (40) is arranged concentrically and radially within the clutch (28).

12. Clutch arrangement according to one of Claims 1 to 11, **characterized in that** the locking device (40) is integrated into an actuator drive (32), in particular into a hydraulic cylinder (72, 84).

13. Motor vehicle drive train (10) having a clutch arrangement (14) according to one of Claims 1 to 12.

14. Method for actuating a clutch arrangement (14) according to one of Claims 1 to 12, having the steps of moving the actuator section (34) in a forward direction beyond a closed position (2), from which on the clutch (28) is closed, in order to bring about the locked position (4).

15. Method according to Claim 14, wherein the actuator section (34) is firstly moved in the forward direction in order to exit the locked position (4).

16. Method according to Claim 14 or 15, wherein the actuator section (34) of file actuator arrangement (30) is guided by means of a slotted-link guide (44) in order to bring about and/or to exit the locked position (4).

## Revendications

1. Agencement d'embrayage (14) pour la connexion de deux composants (24, 26) d'une chaîne cinématique de véhicule automobile (10) pouvant tourner l'un par rapport à l'autre, en particulier pour la connexion de deux arbres d'une transmission de véhicule automobile (16) ou d'un arbre (24) avec un pignon fou (26) supporté à rotation sur l'arbre (24), comprenant un embrayage (28), avec un agencement d'actionneur (30) pour actionner l'embrayage (28), l'embrayage (28) étant ouvert dans une première position d'actionneur (1) d'une portion d'actionneur (34) de l'agencement d'actionneur (30), et comprenant un dispositif de blocage (40) pour bloquer la portion d'actionneur (34) dans une position de blocage (4), afin de maintenir fermé l'embrayage (28),
le dispositif de blocage (40) présentant un guide à coulisse (44) avec une première portion de guidage (55) et une deuxième portion de guidage (61) pour la portion d'actionneur (34), la position de blocage (4) pouvant être atteinte à partir de la première position d'actionneur (1) par le biais de la première portion de guidage (55) et la première position d'actionneur (1) pouvant être atteinte à partir de la position de blocage (4) par le biais de la deuxième portion de guidage (61),
**caractérisé en ce que**
le dispositif de blocage (40) présente un dispositif de verrouillage mécanique (47) pour le blocage de la portion d'actionneur (34), le dispositif de verrouillage (47) étant réalisé de manière séparée du guide à coulisse (44).

2. Agencement d'embrayage selon la revendication 1, **caractérisé en ce que** la première portion de guidage (55) et la deuxième portion de guidage (61) forment une coulisse en forme de coeur (44'),

3. Agencement d'embrayage selon la revendication 1, **caractérisé en ce que** la première portion de guidage (55) et la deuxième portion de guidage (61) sont réalisées à chaque fois en forme de L et sont disposées latéralement l'une à côté de l'autre.

4. Agencement d'embrayage selon l'une quelconque des revendications 1 à 3, **caractérisé en ce que** le guide à coulisse (44) présente un premier canal de guidage (52) orienté essentiellement axialement, un deuxième canal de guidage (54) s'y raccordant et orienté essentiellement transversalement ainsi qu'un troisième canal de guidage (56) se raccordant au deuxième canal de guidage (54), orienté essentiellement axialement.

5. Agencement d'embrayage selon l'une quelconque des revendications 1 à 4, **caractérisé en ce que** la portion d'actionneur (34) de l'agencement d'actionneur (30) est une portion de pressage (34) qui est accouplée à l'embrayage (28) par le biais d'un agencement de ressort (36).

6. Agencement d'embrayage selon l'une quelconque des revendications 1 à 5, **caractérisé en ce que** la portion d'actionneur (34) est accouplée dans la direction périphérique à un organe rotatif de l'embrayage (28), et est accouplée par le biais d'un palier axial (74) à un entraînement d'actionneur (32).

7. Agencement d'embrayage selon l'une quelconque des revendications 1 à 6, **caractérisé en ce que** la portion d'actionneur (34) présente un premier élément de douille qui est disposé concentriquement à un axe longitudinal (25) de l'embrayage (28).

8. Agencement d'embrayage selon l'une quelconque des revendications 1 à 7, **caractérisé en ce que** le guide à coulisse (44) est réalisé au niveau d'un deuxième élément de douille (42) qui est disposé concentriquement par rapport à un axe longitudinal (25) de l'embrayage (28).

9. Agencement d'embrayage selon la revendication 8, **caractérisé en ce que** le deuxième élément de douille (42) est supporté à rotation sur un arbre (24).

10. Agencement d'embrayage selon l'une quelconque des revendications 1 à 9, **caractérisé en ce que** la portion d'actionneur (34) de l'agencement d'actionneur (30) présente une portion de denture (48) qui, dans la position de blocage (4), vient en prise par l'arrière avec une denture conjuguée fixée axialement (50) du dispositif de blocage (40).

11. Agencement d'embrayage selon l'une quelconque des revendications 1 à 10, **caractérisé en ce que** le dispositif de blocage (40) est disposé concentriquement et radialement à l'intérieur de l'embrayage (28).

12. Agencement d'embrayage selon l'une quelconque des revendications 1 à 11, **caractérisé en ce que** le dispositif de blocage (40) est intégré dans un entraînement d'actionneur (32), en particulier dans un cylindre hydraulique (72, 84).

13. Chaîne cinématique de véhicule automobile (10) comprenant un agencement d'embrayage (14) selon l'une quelconque des revendications 1 à 12.

14. Procédé pour actionner un agencement d'embrayage (14) selon l'une quelconque des revendications 1 à 12, comprenant les étapes consistant à déplacer la portion d'actionneur (34) pour l'ajustement de la position de blocage (4) dans une direction vers l'avant au-delà d'une position de fermeture (2) à partir de laquelle l'embrayage (28) est fermé.

15. Procédé selon la revendication 14, dans lequel la portion d'actionneur (34) est d'abord déplacée dans la direction vers l'avant pour quitter la position de blocage (4).

16. Procédé selon la revendication 14 ou 15, dans lequel la portion d'actionneur (34) de l'agencement d'actionneur (30) est guidée au moyen du guide à coulisse (44) pour ajuster et/ou pour quitter la position de blocage (4).
